Europäisches Patentamt

European Patent Office

Office européen des brevets

(19)

(11) Numéro de publication : **0 036 801**
**B1**

(12) **FASCICULE DE BREVET EUROPÉEN**

(45) Date de publication du fascicule du brevet :
29.02.84

(51) Int. Cl.³ : **G 01 N 11/12**, G 01 N 33/48

(21) Numéro de dépôt : 81400373.7

(22) Date de dépôt : **11.03.81**

(54) **Appareil pour mesurer automatiquement la viscosité des liquides.**

(30) Priorité : 26.03.80 FR 8006658

(43) Date de publication de la demande :
30.09.81 Bulletin 81/39

(45) Mention de la délivrance du brevet :
29.02.84 Bulletin 84/09

(84) Etats contractants désignés :
AT BE CH DE GB IT LI LU NL SE

(56) Documents cités :
FR-A- 1 275 856
FR-A- 1 280 150
FR-A- 2 328 191
GB-A- 1 491 865
US-A- 2 252 572
US-A- 2 320 218
INSTRUMENTATION AND CONTROL, no. 6 juin 1969
Oxford, GB A.N. MELEKHIN et al.: "An automatic
sphere viscometer", page 60
REVIEW OF SCIENTIFIC INSTRUMENTS, vol. 48, no.
7, juillet 1977, New York, US R.H. GEILS et al.: "Smallvolume inclined, falling-ball viscometer" pages 783-
785

(73) Titulaire : **MEDICA-TEST Société à Responsabilité
Limitée**
**37, rue de l'Ermitage**
**F-86280 Saint-Benoît (FR)**

(72) Inventeur : **Garnaud, Guy**
**89, avenue Jacques Coeur**
**F-86000 Poitiers (FR)**
Inventeur : **Bouhier, Roger**
**89, rue Concordet**
**F-86000 Poitiers (FR)**

(74) Mandataire : **Bouju, André**
**38 Avenue de la Grande Armée**
**F-75017 Paris (FR)**

Jouve, 18, rue St-Denis, 75001 Paris, France

Appareil pour mesurer automatiquement la viscosité des liquides

La présente invention concerne un appareil pour mesurer automatiquement la viscosité des liquides.

Cet appareil est destiné principalement à mesurer la viscosité du sang, mais peut être également appliqué à d'autres liquides dont il est intéressant de connaître la viscosité, tels que les hydrocarbures, les peintures, les vernis, les encres, les liquides sirupeux et analogues.

Dans le domaine médical, la mesure de la viscosité du sang et notamment l'évolution de cette viscosité, jusqu'à coagulation, fournissent des renseignements très intéressants sur certaines maladies.

On connaît des viscosimètres comprenant un tube viscosimétrique, maintenu dans une position sensiblement verticale et renfermant une bille, des moyens pour introduire le liquide à tester dans ce tube et pour mesurer la durée de chute de cette bille dans le tube contenant le liquide. Cette mesure de durée permet, à son tour, de déterminer la viscosité par des moyens divers, bien connus du technicien.

Après avoir mesuré cette durée de chute, on doit remettre la bille en position initiale. Cette opération est réalisée généralement manuellement en retournant le tube viscosimétrique.

Le document « An automatic sphere viscosimeter » n° 6, juin 1969, Oxford G.3 décrit un viscosimètre à bille comprenant un solénoïde qui maintient la bille lorsque ce solénoïde est parcouru par un courant et qui relâche cette bille lorsque le courant est coupé. Une bobine d'induction est placée en bas du tube pour détecter la fin de la chute de la bille.

Cet appareil permet de mesurer avec précision la durée de la chute de la bille.

Toutefois cet appareil ne permet pas d'obtenir une remontée automatique de la bille dans le tube, de sorte que son emploi n'est pas très commode lorsqu'on veut faire des mesures précises et répétitives indispensables dans le cas où l'on veut étudier l'évolution de la viscosité d'un liquide au cours du temps.

Le brevet français 1 280 150 décrit un viscosimètre dont le tube présente une tige qui peut se déplacer dans le liquide grâce au champ exercé par un solénoïde coaxial au tube. Un tel viscosimètre ne pourrait pas fonctionner si la tige mobile était remplacée par une bille.

Les propriétés de viscosité et de coagulation du sang dépendent du cisaillement auquel est soumis le sang avant et pendant la mesure, c'est-à-dire de la manière dont le sang est remué ou brassé. Il en résulte que les mesures doivent être effectuées dans la seringue de prélèvement de préférence, immédiatement après le prélèvement puis à intervalles de temps connus avec un brassage homogène et reproductible. La remontée de la bille dans le viscosimètre constitue un brassage du sang et, par conséquent, la bille doit être remontée sur toute la hauteur de la colonne de liquide, faute de quoi, dans la partie supérieure, des groupes de globules rouges s'agglomèrent en paquets, des caillots se forment de façon incontrôlable et faussent les mesures successives.

Le brassage homogène, qui ne doit pas être trop énergique afin d'éviter l'altération des propriétés mécaniques du sang, ne peut s'effectuer qu'avec une remontée de la bille à vitesse relativement faible et régulière. Il en résulte que la remontée de la bille ne peut pas être effectuée par action d'un électro-aimant ou d'un solénoïde ordinaires sur une bille magnétique. En particulier, dans un solénoïde la composante longitudinale du champ est soit constante (sauf à ses extrémités) dans un solénoïde long et la bille ne peut se déplacer sur une distance notable, soit la zone de remontée est très courte dans un solénoïde court dans lequel ladite composante du champ n'est nulle part constante. De plus, la vitesse de remontée de la bille est très accélérée si aucun dispositif particulier n'est réalisé pour produire une variation de champ magnétique convenable.

Ainsi, les appareils connus ne sont pas adaptés par exemple pour mesurer avec précision la viscosité du sang, compte tenu, d'une part, de la rapidité avec laquelle cette viscosité évolue au cours du temps en raison de la coagulation, et d'autre part, en raison de la nécessité de produire dans tout le volume des conditions de brassage homogène.

Le but de la présente invention est de créer un appareil pour mesurer la viscosité des liquides qui soit à la fois très précis, commode à utiliser et permettant des mesures répétitives à des intervalles de temps très rapprochés, avec un brassage homogène, et qui soit de ce fait, particulièrement bien adapté à la mesure de la viscosité d'un liquide tel que le sang dont la viscosité évolue très rapidement au cours du temps.

L'appareil visé par l'invention comprend un tube viscosimétrique maintenu dans une position inclinée et renfermant une bille, des moyens pour introduire le liquide à tester dans ledit tube et des moyens pour mesurer la durée de chute de cette bille dans le tube contenant le liquide, ces moyens étant associés à des moyens pour convertir cette durée de chute de la bille en viscosité, et des moyens électromagnétiques permettant de remonter la bille réalisée en matériau magnétique en haut du tube et de la maintenir dans cette position haute et des moyens pour supprimer ce champ magnétique et permettre la chute de la bille dans le tube.

Suivant l'invention, cet appareil est caractérisé en ce que lesdits moyens électromagnétiques comprennent un électro-aimant comportant deux pôles présentant des extrémités disposées en regard l'une de l'autre et définissant un entrefer allongé et étroit le long duquel est placé le tube viscosimétrique, la distance entre le tube et les extrémités des deux pôles augmentant progressivement entre le haut et le bas du tube.

Ainsi, à la fin de la mesure, il suffit de mettre l'électro-aimant sous tension pour faire remonter la bille. Cette remontée est assurée grâce à la variation de champ magnétique créée le long du tube. La bille s'immobilise en haut du tube, en un endroit très précis et parfaitement reproductible où le champ magnétique est le plus intense. Pour effectuer une mesure, il suffit de couper l'alimentation électrique de l'électro-aimant, ce qui entraîne la chute de la bille. La remontée et la chute de la bille, s'effectuent ainsi automatiquement, sans avoir à déplacer aucun élément de l'appareil, ce qui permet de réaliser des mesures successives avec des intervalles de temps très courts, de sorte qu'il est possible de suivre dans de très bonnes conditions l'évolution de la viscosité et de la coagulation d'un liquide tel que le sang.

Selon une version préférée de l'invention, l'appareil comprend un support fixe en matière non magnétique, le tube viscosimétrique étant éventuellement constitué par une seringue jetable destinée à être engagée de façon amovible dans ce support tubulaire.

Cette seringue joue ainsi simultanément le rôle d'organe de prélèvement du liquide à tester et de tube viscosimétrique. Dans le cas où le liquide est du sang et où l'on désire effectuer des mesures successives à intervalles de temps très courts, il est avantageux de disposer d'un jeu de seringues jetables.

Dans un tel cas, il est également avantageux que l'électro-aimant soit associé à des moyens de commande permettant un fonctionnement automatique et périodique de cet électro-aimant en vue de réaliser des mesures répétitives.

L'invention se réfère aussi à un appareil suivant le préambule des revendications 1 ou 2, où les moyens électromagnétiques comprennent un solénoïde entourant le tube et présentant à sa partie supérieure un nombre de spires par unité de longueur plus grand et/ou des spires de diamètre plus petit, qu'à la partie inférieure.

Ce solénoïde permet d'obtenir un résultat sensiblement identique à celui procuré par l'électro-aimant défini précédemment.

D'autres particularités et avantages de l'invention apparaîtront encore dans la description ci-après.

Aux dessins annexés donnés à titre d'exemples non limitatifs :

la figure 1 est une vue en élévation et avec arrachements du devant d'un appareil conforme à l'invention,

la figure 2 est une vue en élévation latérale de l'appareil selon la figure 1,

la figure 3 est une vue en coupe suivant le plan II-II de la figure 2,

la figure 4 est un schéma du circuit électronique de commande automatique du fonctionnement de l'électro-aimant.

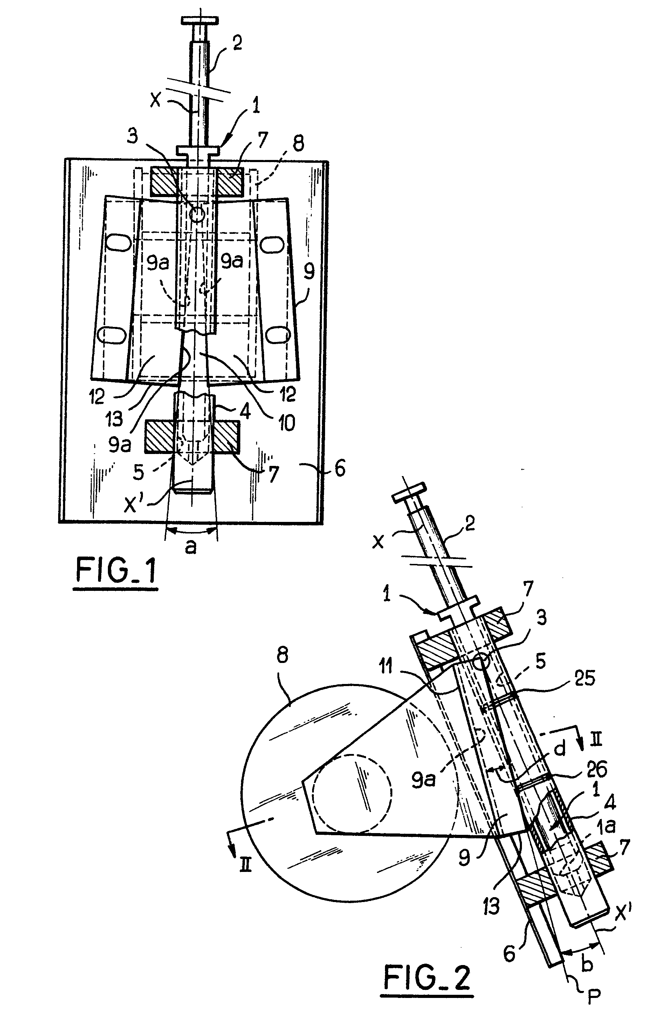

Dans la réalisation des figures 1 et 2, l'appareil conforme à l'invention comprend une seringue 1 comportant un piston 2 et renfermant un liquide dont on désire mesurer la viscosité. Cette seringue 1 renferme une bille 3 en matériau magnétique tel que l'acier inoxydable ou l'acier ordinaire éventuellement revêtu par un revêtement de protection pour éviter toute agression chimique par le liquide à tester. La seringue 1 est de préférence jetable, notamment si le liquide à tester est difficile à nettoyer.

La seringue 1 est engagée de façon amovible dans l'évidement interne 5 d'un support tubulaire 4 en matière plastique. Ce support tubulaire 4 est fixé contre une plaque 6 au moyen de deux bras 7. Cette plaque est fixée à un socle non représenté, assurant la stabilité de l'appareil.

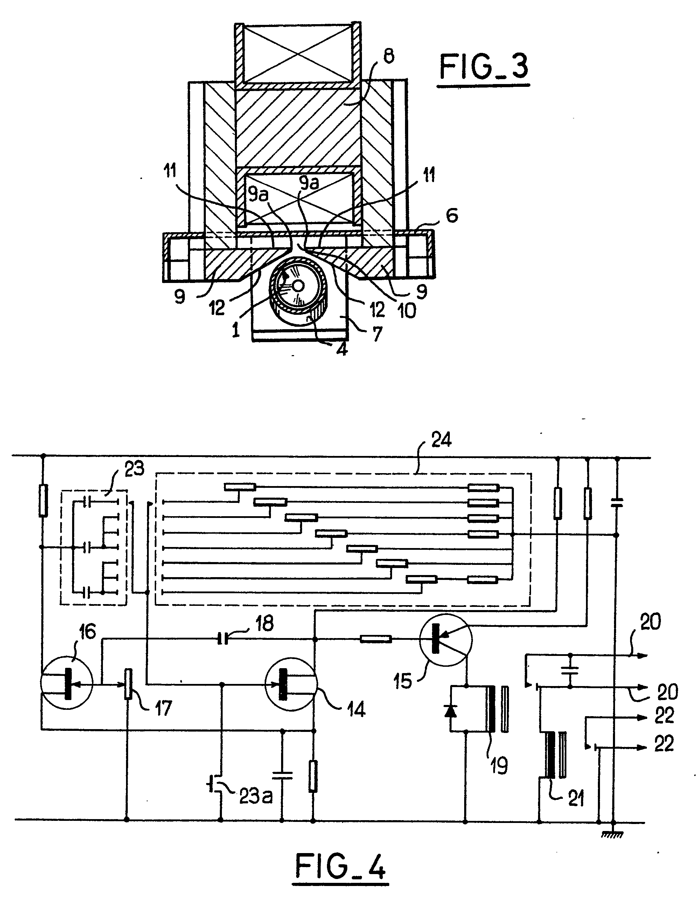

A l'arrière de la plaque 6 est disposé un électro-aimant 8 qui est solidement fixé au socle de l'appareil. Cet électro-aimant comporte deux pôles 9 dont les extrémités 9a sont situées en regard l'une de l'autre (voir figure 3). Ces extrémités 9a définissent un entrefer 10 allongé et étroit le long duquel est placé le support tubulaire 4 dans lequel est disposée la seringue 1.

On voit notamment sur la figure 2 que la distance d comprise entre le support tubulaire et les extrémités 9a des pôles 9 augmente progressivement entre le haut et le bas de ce support 4. On définit ainsi à l'intérieur de la seringue 1 un champ magnétique variable produisant une force dirigée vers le haut de la seringue 1.

Dans l'exemple représenté, les pôles 9 présentent au voisinage de leurs extrémités 9a une section transversale triangulaire. Les faces 11 de ces pôles 9 situées à l'opposé du support tubulaire 4 sont disposées dans le prolongement l'une de l'autre. Les faces 12 de ces pôles 9 adjacentes au support tubulaire 4 définissent un dièdre à l'intérieur duquel est disposé ce support 4.

Les extrémités 9a des pôles 9 sont rectilignes et forment entre elles un angle a (figure 1). Cet angle a peut varier sensiblement entre 0 et 20°.

A la partie supérieure du support tubulaire 4, les extrémités 9a des pôles 9 sont situées à quelques millimètres l'une de l'autre et de la paroi extérieure du support tubulaire 4. Cette distance est nettement inférieure au diamètre de la seringue 1. A cet endroit, le champ magnétique produit par l'électro-aimant 8 est le plus intense.

Par ailleurs, l'axe X-X' de la seringue 1 forme avec le plan P parallèle aux faces 11 des pôles 9 un angle b qui peut varier entre 5 et 20° environ.

Dans la position représentée sur les figures 1 et 2, l'électro-aimant 8 est sous tension et la bille 3 est retenue à la partie supérieure de la seringue 1, près du piston 2 de cette dernière, à l'endroit où le champ magnétique est le plus intense. En coupant l'alimentation électrique de l'électro-aimant, on provoque la chute de la bille 3 vers le bas 1a de la seringue 1.

Le bord inférieur 13 des pôles 9 se trouve à une distance suffisamment réduite de l'extrémité inférieure 1a de la seringue pour que le champ magnétique puisse remonter la bille à partir de cette extrémité 1a.

Le dispositif de remontée automatique de la bille 3 rend possible des mesures répétitives de viscosité, selon un cycle de fonctionnement entièrement automatique.

L'électro-aimant 8 est à cet effet associé à un circuit de commande automatique de son fonctionnement, tel que représenté sur la figure 4.

Ce circuit électronique comprend un premier circuit de temporisation qui détermine le temps de passage du courant dans l'électro-aimant 8. Ce premier circuit de temporisation comprend essentiellement des transistors à effet de champ 14 et 16, permettant une constante de temps suffisamment longue, et le transistor amplificateur 15. Le circuit comporte d'autre part, une résistance 17 et une capacité 18, un relais 19 commandant le circuit électrique 20 d'alimentation de l'électro-aimant 8 et un autre relais 21 commandant la remise à zéro en 22 d'un chronomètre électronique non représenté.

Par ailleurs, la mise en fonctionnement manuel de ce premier circuit de temporisation s'effectue à l'aide d'un interrupteur 23a.

Le fonctionnement de ce premier circuit de temporisation est le suivant :

En fermant l'interrupteur 23a, le transistor 14 est rendu conducteur pendant une durée suffisante pour que le transistor 15 devienne à son tour conducteur et ferme le relais 19. Ce dernier ferme le circuit électrique 20 d'alimentation de l'électro-aimant 8 et remet à zéro le chronomètre électronique relié au circuit 22 par l'intermédiaire du relais 21.

Au bout d'une durée définie par la constante de temps due à 17 et 18, le transistor 16 devient conducteur, les transistors 14 et 15 se bloquent, ce qui entraîne la coupure du circuit 20 d'alimentation de l'électro-aimant 8 et la chute de la bille 3. On peut alors mesurer le temps de chute de la bille, comme on l'expliquera plus en détail plus loin.

Le second temporisateur variable est défini par les circuits électriques 23 et 24. Ce temporisateur variable modifie la cadence de reproduction du cycle de mesure selon des durées variables, égales par exemple à 5 secondes, 10 secondes, 20 secondes et 40 secondes.

Les moyens pour mesurer automatiquement le temps de chute de la bille 3, comprennent (voir figure 2), deux bobines d'induction 25, 26 entourant axialement le support tubulaire 4 et espacées l'une de l'autre par exemple de 20 mm. Ces deux bobines 25, 26 constituent les self-inductions d'un circuit oscillant dont les variations de fréquence dues au passage de la bille sont détectées et transformées en impulsions capables de commander un chronomètre électronique ou l'horloge interne d'un microprocesseur. Les temps mesurés sont transformés en valeurs de viscosité par le microprocesseur.

L'expérience a montré que l'appareil conforme à l'invention permettait d'obtenir des valeurs de viscosité extrêmement précises et parfaitement reproductibles pour un même liquide. Ainsi, dans le cas de l'exemple représenté, on a obtenu des durées de chute de la bille constantes à 1/1 000 près à température constante.

Bien entendu, l'invention n'est pas limitée à l'exemple que l'on vient de décrire, et on peut apporter à celui-ci de nombreuses modifications sans sortir du cadre de l'invention.

Ainsi, pour effectuer des mesures de viscosité du sang dans des conditions de faible cisaillement, c'est-à-dire lors d'un mouvement lent de la bille, le dispositif selon la figure 2 comprenant l'électro-aimant et le tube viscosimétrique peuvent être portés par un support à inclinaison réglable avec deux positions extrêmes pré-déterminées de telle sorte que l'inclinaison du tube viscosimétrique par rapport à la verticale puisse varier.

Par ailleurs, l'électro-aimant 8 peut être remplacé par ou combiné avec un solénoïde coaxial au tube viscosimétrique et présentant un nombre de spires par unité de longueur plus grand à la partie supérieure du tube qu'à sa partie inférieure et/ou un diamètre de spires plus petit afin de créer un gradient de champ magnétique approprié.

Pour augmenter l'efficacité du solénoïde (en diminuant la réluctance du circuit magnétique extérieur au solénoïde) il peut être utile de conduire les lignes de champ extérieures par du fer. Le circuit magnétique en fer peut être un cylindre, coaxial au solénoïde, l'entourant à l'extérieur ; il peut comporter une pièce polaire à sa partie supérieure (les deux pôles du solénoïde étant à ses deux extrémités, il y a lieu de ne pas augmenter l'intensité locale du champ par une pièce polaire à la partie inférieure). Cette pièce polaire peut être un anneau entourant le support de la seringue et pouvant stabiliser la bille dans une position précise qui serait sensiblement au centre de cet anneau.

Dans une autre variante, la traversée par la bille 3 d'une seule bobine d'induction fournit une variation de fréquence donnant une variation de tension dont la pente est proportionnelle à la vitesse de chute. Cette tension affichée sur un voltmètre numérique peut être transformée en valeur de viscosité par un calcul.

L'appareil conforme à l'invention peut être utilisé pour mesurer avec une extrême précision les temps de coagulation du sang.

La mesure du temps de coagulation est effectuée par un chronomètre dont le départ est donné par la première impulsion due au passage de la bille 3 dans la bobine d'induction 25, c'est-à-dire dès l'introduction de la seringue 1 dans l'appareil. L'arrêt du chronomètre s'effectue dès que la bille 3 cesse de se déplacer et de fournir des impulsions au système de mesure.

Pour les besoins pratiques, l'appareil conforme à l'invention peut être pourvu des accessoires suivants : enceinte thermostatée entourant le support 4 de la seringue 1, thermomètre électronique à affichage prenant la température près de la seringue 1, chronomètre mesurant la durée de coagulation et enregistreur du temps de chute, de la viscosité, de la température et de la durée de coagulation. L'appareil conforme à l'invention, est en outre avantageusement porté sur trois vis de calage et peut comporter un niveau à bulle pour permettre son positionnement horizontal correct.

Par ailleurs, l'appareil conforme à l'invention peut comprendre une bobine d'induction supplémentaire disposée à la partie supérieure du tube viscosimétrique ou de la seringue 1 pour bloquer, en position fermée le relais de commande 19 de mise sous tension de l'électro-aimant 8 tant que la bille 3 est en position basse.

L'appareil conforme à l'invention peut être utilisé pour mesurer la viscosité de tous les liquides tels que les hydrocarbures, les huiles, les peintures, les vernis, les encres, les liquides biologiques, les solutions salines, les solutions sirupeuses et les suspensions. Il peut être utilisé dans tous les cas où la connaissance de la viscosité est utile, en particulier dans l'industrie chimique pour régler la puissance de pompage des liquides. Dans l'industrie des peintures, il permet l'adjonction de solvants en quantité définie aux peintures et vernis. Dans le domaine médical, il est utilisé pour contrôler les maladies ayant une incidence sur la viscosité ou le temps de coagulation du sang et pour contrôler les risques opératoires en corrélation avec la viscosité. Dans le domaine pharmaceutique, l'appareil conforme à l'invention peut servir au contrôle de l'action des médicaments sur la viscosité du sang. Dans l'industrie alimentaire, l'appareil selon l'invention peut servir à contrôler les sirops et la gélification. Il peut également permettre une mesure rapide de l'état de saturation des solutions.

**Revendications**

1. Appareil pour mesurer automatiquement la viscosité des liquides, comprenant un tube viscosimétrique (1) maintenu dans une position inclinée et renfermant une bille (3), des moyens (2) pour introduire le liquide à tester dans ledit tube viscosimétrique et des moyens pour mesurer la durée de chute de cette bille (3) dans le tube (1) contenant le liquide, ces moyens étant associés à des moyens pour convertir cette durée de chute de la bille (3) en viscosité, et des moyens électromagnétiques (8) permettant de remonter la bille (3) réalisée en matériau magnétique en haut du tube viscosimétrique et de la maintenir dans cette position haute et des moyens pour supprimer ce champ magnétique et permettre la chute de la bille (3) dans le tube viscosimétrique (1), caractérisé en ce que lesdits moyens électromagnétiques (8) comprennent un électro-aimant qui comporte deux pôles (9) présentant des extrémités (9a) disposées en regard l'une de l'autre et définissant un entrefer (10) allongé et étroit le long duquel est placé le tube viscosimétrique (1), la distance (d) entre ce tube viscosimétrique (1) et les extrémités (9a) des deux pôles (9) augmentant progressivement entre le haut et le bas du tube viscosimétrique (1).

2. Appareil pour mesurer automatiquement la viscosité des liquides, comprenant un tube viscosimétrique (1) maintenu dans une position inclinée et renfermant une bille (3), des moyens (2) pour introduire le liquide à tester dans ledit tube viscosimétrique (1) et des moyens pour mesurer la durée de chute de cette bille (3) dans le tube viscosimétrique (1) contenant le liquide, ces moyens étant associés à des moyens pour convertir cette durée de chute de la bille (3) en viscosité, et des moyens électromagnétiques (8) permettant de remonter la bille (3) réalisée en matériau magnétique en haut du tube viscosimétrique et de la maintenir dans cette position haute et des moyens pour supprimer ce champ magnétique et permettre la chute de la bille (3) dans le tube viscosimétrique (1), caractérisé en ce que lesdits moyens électromagnétiques (8) comprennent un solénoïde entourant le tube viscosimétrique (1) et présentant à sa partie supérieure un nombre de spires par unité de longueur plus grand et/ou des spires de diamètre plus petit, qu'à la partie inférieure.

3. Appareil conforme à la revendication 1, caractérisé en ce que les pôles (9) présentent au voisinage de leurs extrémités (9a) une section transversale triangulaire, les extrémités (9a) de ces pôles étant rectilignes et formant entre elles un angle (a) sensiblement compris entre 0° et 20° dont le sommet est situé du côté haut du tube viscosimétrique, en ce que la distance minimale comprise entre ces extrémités (9a) est inférieure au diamètre du tube viscosimétrique (1) et en ce que l'axe de ce dernier forme avec un plan (P) parallèle aux deux extrémités rectilignes (9a) des pôles (9) un angle (b) compris entre 5° et 20° dont le sommet est situé du côté haut du tube viscosimétrique.

4. Appareil conforme à la revendication 3, caractérisé en ce que l'entrefer (10) défini par les pôles (9) de l'électro-aimant (8) a une longueur sensiblement égale à la hauteur de chute de la bille (3).

5. Appareil conforme à l'une quelconque des revendications 1, 3 ou 4, caractérisé en ce qu'il comprend un support (4) fixe en matière non magnétique et en ce que le tube viscosimétrique (1) est constitué par une seringue destinée à être engagée de façon amovible dans ledit support (4).

6. Appareil conforme à l'une quelconque des revendications 1, 3 à 5, dans lequel l'électro-aimant (8) est associé à des moyens de commande (14 à 24) permettant un fonctionnement automatique et périodique de l'électro-aimant en vue de réaliser des mesures répétitives de viscosité, caractérisé en ce que lesdits moyens de commande comprennent un premier temporisateur (23, 24) commandant l'arrêt du fonctionnement de l'électro-aimant (8) pendant une durée réglable et suffisante pour permettre la mesure de la durée de chute de la bille (3), et un second temporisateur (14 à 18) commandant par l'intermédiaire d'un relais (19) la mise sous tension de l'électro-aimant (8) pendant une durée suffisante pour permettre la remontée de la bille dans le tube viscosimétrique (1).

7. Appareil conforme à l'une quelconque des revendications 1, 3 à 6, caractérisé en ce que les moyens pour convertir la mesure de la durée de chute de la bille comprennent un chronomètre à affichage numérique commandé par la chute de la bille et un microprocesseur programmé pour convertir les valeurs mesurées par le chronomètre en viscosité.

8. Appareil conforme aux revendications 1, 3 à 7, caractérisé en ce qu'il comprend une bobine d'induction disposée à la partie supérieure du tube viscosimétrique (1) pour bloquer en position fermée le relais de commande (19) de mise sous tension de l'électro-aimant (8) tant que la bille (3) est en position basse.

## Claims

1. Apparatus for automatically measuring the viscosity of liquids, comprising a viscosimetric tube (1) held in an inclined position and enclosing a sphere (3), means (2) for introducing the liquid to be tested into said viscosimetric tube and means for measuring the fall time of this sphere (3) inside the tube (1) containing the liquid, these means being associated with means for converting this fall time for the sphere (3) into viscosity, and electromagnetic means (8) whereby the sphere (3) made of a magnetic material is raised to the top of the viscosimetric tube and held in this raised position and means for eliminating the magnetic field thus permitting the sphere (3) to fall inside the viscosimetric tube (1), characterized in that said electromagnetic means (8) comprise an electromagnet that includes two poles (9) offering ends (9a) arranged opposite one another and defining a stretched and narrow air-gap (10) along which the viscosimetric tube (1) is placed, the distance (d) between this viscosimetric tube (1) and the ends (9a) of both poles (9) increasing progressively between the top and bottom of the viscosimetric tube (1).

2. Apparatus for automatically measuring the viscosity of liquids, comprising a viscosimetric tube (1) held in an inclined position and enclosing a sphere (3), means (2) for introducing the liquid to be tested into said viscosimetric tube (1) and means for measuring the fall time of this sphere (3) inside the viscosimetric tube (1) containing the liquid, these means being associated with means for converting this fall time for the sphere (3) into viscosity, and electromagnetic means (8) whereby the sphere (3) made of a magnetic material is raised to the top of the viscosimetric tube and held in this raised position and means for eliminating this magnetic field thus permitting the sphere (3) to fall inside the viscosimetric tube (1), characterized in that said electromagnetic means (8) comprise a solenoïd enveloping the viscosimetric tube (1) and offering in its upper part a greater number of spires per unit length and/or smaller diameter spires than in the lower part.

3. Apparatus in accordance with claim 1, characterized in that the poles (9) have in the vicinity of their ends (9a) a triangular transverse cross-section, the ends (9a) of these poles being rectilinear and forming therebetween an angle (a) substantially lying between 0° and 20° the apex of which is located at the upper end of the viscosimetric tube (1), in that the minimum distance included between these ends (9a) is smaller than the diameter of the viscosimetric tube (1) and in that the axis thereof forms with a plane (P) parallel to the two rectilinear ends (9a) of the poles (9) an angle (b) ranging between 5° and 20° the apex of which is located at the upper end of the viscosimetric tube (1).

4. Apparatus in accordance with claim 3, characterized in that the air-gap (10) defined by the poles (9) of the electro-magnet (8) is substantially equal in length to the fall height of the sphere (3).

5. Apparatus in accordance with any one of claims 1, 3 or 4, characterized in that it comprises a non-magnetic fixed support (4) and in that the viscosimetric tube (1) consists of a syringe designed to be removably slotted into said support (4).

6. Apparatus in accordance with any one of claims 1, 3 to 5, in which the electromagnet (8) is associated with control means (14 to 24) permitting automatic and periodic operation of the electromagnet with a view to achieving repetitive viscosity measurements, characterized in that said control means comprise a first retarder (23, 24) switching off the electro-magnet (8) for an adjustable and sufficient period of time to allow measurements of the fall time of the sphere (3), and a second retarder (14 to 18) switching on the electro-magnet (8) via a relay (19) for a period of time sufficient to allow the sphere to rise inside the viscosimetric tube (1).

7. Apparatus in accordance with any one of claims 1, 3 to 6, characterized in that the means for converting the sphere fall-time measurement comprise a digital display stop-clock controlled by fall of the sphere and a microprocessor programmed to convert the values measured by the stop-clock into viscosity values.

8. Apparatus in acordance with claims 1, 3 to 7, characterized in that it comprises an induction coil arranged in the upper part of the viscosimetric tube (1) in order to lock the electro-magnet energizing control relay in the off position as long as the sphere is in the lower position.

## Ansprüche

1. Gerät zum automatischen Messen der Viskosität von Flüssigkeiten, mit einem Viskosimeterrohr (1), das in einer geneigten Lage gehalten wird und eine Kugel (3) einschließt, Mitteln (2) zum Einführen der zu prüfenden Flüssigkeit in das Viskosimeterrohr und Mitteln zum Messen der Falldauer dieser Kugel (3) in dem die Flüssigkeit enthaltenden Rohr (1), wobei diese Mittel einer Einrichtung zum Umsetzen dieser Falldauer der Kugel (3) in die Viskosität zugeordnet sind, und mit elektromagnetischen Mitteln (8), die erlauben, die aus magnetischem Material gebildete Kugel (3) in dem Viskosimeterrohr wieder nach oben zu führen und in dieser angehobenen Stellung zu halten, sowie mit einer Einrichtung zum Unterdrücken dieses Magnetfeldes und Freigeben des Falles der Kugel (3) in dem Viskosimeterrohr (1), dadurch gekennzeichnet, daß die elektromagnetischen Mittel (8) einen Elektromagneten umfassen, der zwei Pole (9) aufweist, deren Enden (9a) einander gegenüber angeordnet sind und einen langgestreckten und schmalen Luftspalt (10) bilden, längs dem das Viskosimeterrohr (1) angeordnet ist, wobei der Abstand (d) zwischen diesem Viskosimeterrohr (1) und den Enden (9a) der beiden Pole (9) progressiv zwischen Oberseite und Unterseite des Viskosimeterrohres (1) zunimmt.

2. Gerät zum automatischen Messen der Viskosität von Flüssigkeiten, mit einem Viskosimeterrohr (1), das in einer geneigten Lage gehalten wird und eine Kugel (3) einschließt, Mitteln (2) zum Einführen der zu prüfenden Flüssigkeit in das Viskosimeterrohr (1) und Mitteln zum Messen der Falldauer dieser Kugel (3) in dem die Flüssigkeit enthaltenden Viskosimeterrohr (1), wobei diese Mittel einer Einrichtung zum Umsetzen dieser Falldauer der Kugel (3) in die Viskosität zugeordnet sind, und mit elektromagnetischen Mitteln (8), die erlauben, die aus magnetischem Material gebildete Kugel (3) in dem Viskosimeterrohr wieder nach oben zu führen und in dieser angehobenen Stellung zu halten, sowie mit einer Einrichtung zum Unterdrücken dieses Magnetfeldes und Freigeben des Falles der Kugel (3) in dem Viskosimeterrohr (1), dadurch gekennzeichnet, daß die elektromagnetischen Mittel (8) eine Zylinderspule umfassen, die das Viskosimeterrohr (1) umgibt und an ihrem oberen Teil eine größere Anzahl von Windungen pro Längeneinheit und/oder Windungen mit kleinerem Durchmesser als am unteren Teil aufweist.

3. Gerät nach Anspruch 1, dadurch gekennzeichnet, daß die Pole (9) in der Nähe ihrer Enden (9a) einen dreieckförmigen Querschnitt aufweisen, wobei die Enden (9a) dieser Pole geradlinig sind und zwischen sich einen Winkel (a) bilden, der im wesentlichen zwischen 0 und 20° liegt und dessen Scheitel an der Oberseite des Viskosimeterrohres liegt, daß der minimale Abstand zwischen diesen Enden (9a) geringer ist als der Durchmesser des Viskosimeterrohres (1) und daß letzteres mit einer Ebene (P), die parallel zu den beiden geradlinigen Enden (9a) der Pole (9) ist, einen Winkel (b) bildet, der zwischen 5 und 20° liegt und dessen Scheitel an der Oberseite des Viskosimeterrohres liegt.

4. Gerät nach Anspruch 3, dadurch gekennzeichnet, daß der von den Polen (9) des Elektromagneten (8) gebildete Luftspalt (10) eine Länge aufweist, die im wesentlichen gleich der Fallhöhe der Kugel (3) ist.

5. Gerät nach einem der Ansprüche 1, 3 oder 4, dadurch gekennzeichnet, daß es einen feststehenden Träger (4) aus unmagnetischem Material aufweist und daß das Viskosimeterrohr (1) aus einer Spritze gebildet ist, die dazu bestimmt ist, entfernbar in dem Träger (4) eingesetzt zu werden.

6. Gerät nach einem der Ansprüche 1, 3 bis 5, bei welchem der Elektromagnet (8) Steuermitteln (14 bis 24) zugeordnet ist, die ein automatisches und periodisches Arbeiten des Elektromagneten ermöglichen, um wiederholte Viskositätsmessungen durchzuführen, dadurch gekennzeichnet, daß die Steuermittel eine erste Zeitsteuerung (23, 24) umfassen, welche die Beendigung der Funktion des Elektromagneten (8) während einer einstellbaren Dauer steuert, die ausreicht, um die Messung der Falldauer der Kugel (3) zu gestatten, und eine zweite Zeitsteuerung (14 bis 18) umfassen, die über ein Relais (19) die Erregung des Elektromagneten (8) während einer Dauer steuert, die ausreicht, um das Wiederanheben der Kugel in dem Viskosimeterrohr (1) zu gestatten.

7. Gerät nach einem der Ansprüche 1, 3 bis 6, dadurch gekennzeichnet, daß die Einrichtung zum Umsetzen der Messung der Falldauer der Kugel ein Chronometer mit digitaler Anzeige umfaßt, das durch den Fall der Kugel gesteuert wird, und einen Mikroprozessor aufweist, der so programmiert ist, daß er die von dem Chronometer gemessenen Werte in Viskosität umsetzt.

8. Gerät nach den Ansprüchen 1, 3 bis 7, dadurch gekennzeichnet, daß es eine Induktionsspule umfaßt, die im oberen Teil des Viskosimeterrohres (1) angeordnet ist, um das Steuerrelais (19) für die Erregung des Elektromagneten (8) in der geschlossenen Stellung zu blockieren, solange die Kugel (3) in der unteren Stellung ist.

0 036 801

FIG. 1

FIG. 2

1

FIG_3

FIG_4